# EUROPÄISCHE PATENTSCHRIFT

(11) **EP 2 366 567 B1**
(45) Veröffentlichungstag und Bekanntmachung des Hinweises auf die Patenterteilung: **12.06.2013**
(21) Anmeldenummer: 11002199.5
(22) Anmeldetag: 17.03.2011
(51) Int. Cl.: B60G 17/00

(54) **Verfahren zum Steuern eines Dämpfers für einen Kraftwagen**
Method for controlling a dampener for a motor vehicle
Procédé de commande d'un amortisseur pour un véhicule automobile

(30) Priorität: 18.03.2010 DE 102010011875
(43) Veröffentlichungstag der Anmeldung: 21.09.2011
(73) Patentinhaber: Audi AG, 85045 Ingolstadt (DE)
(72) Erfinder: Schimmack, Frank, 85053 Ingolstadt (DE); Niedermeier, Florian, 94424 Arnstorf (DE); Schmidt, Karsten, 85051 Ingolstadt (DE); Reif, Konrad, Professor Dr., 88045 Friedrichshafen (DE)
(74) Vertreter: Patzelt, Heike Anna Maria

(56) Entgegenhaltungen:
- DE-A1- 4 003 959
- JP-A- 2007 255 434

## Beschreibung

Die Erfindung betrifft ein Verfahren zum Steuern eines Dämpfers für einen Kraftwagen nach dem Oberbegriff von Patentanspruch 1.

Einstellbare Stoßdämpfer finden zunehmend Anwendung in der Kraftfahrzeugtechnik. Sie dienen der Anpassung der Härte der Stoßdämpfer in Abhängigkeit von Umweltbedingungen, wie beispielsweise dem Straßenzustand, bzw. in Abhängigkeit von Benutzervorgaben. Es kann dann beispielsweise eingestellt werden, ob ein weiches, komfortables Dämpfungsverhalten oder ein hartes, sportliches Dämpfungsverhalten gewünscht wird.

Die Dämpfung von Fahrwerksbewegungen erfolgt bei einstellbaren Stoßdämpfern üblicherweise hydraulisch. Bei einem solchen Stoßdämpfer bewegt sich ein Kolben in einem Zylinder und verdrängt dabei Öl durch Drosselventile, deren Durchströmungswiderstandes einstellbar ist. Durch ein solches Verändern der Drosselstellung kann die Härte des Stoßdämpfers eingestellt werden.

Durch die Kolbenbewegung im Stoßdämpfer sowie durch die innere Reibung des Öls bei seiner Bewegung wird mechanische Fahrwerksenergie in Wärme umgewandelt. Das Dämpferöl erhitzt sich daher beim Betrieb des Kraftwagens. Da die Viskosität von Flüssigkeiten in der Regel von ihrer Temperatur abhängig ist, verändert sich damit auch das Fließverhalten des Dämpferöls. Mit steigender Temperatur sinkt üblicherweise die Viskosität des Dämpferöls, so dass bei gleicher Drosselstellung die Dämpfungswirkung verringert wird. Umgekehrt steigt mit sinkender Temperatur die Viskosität des Dämpferöls, so dass bei gleich bleibender Drosselstellung der Dämpfer härter wird. Um diesen Temperatureinfluss auszugleichen, ist es wünschenswert, eine viskositäts- und/oder temperaturabhängige Korrektur der Drosselstellung des Dämpfers vorzunehmen, um so immer die gewünschte Dämpferhärte zu erzielen.

Eine temperaturabhängige Steuerung eines Dämpfers ist beispielsweise aus der DE 40 03 959 A1 bekannt. Die Temperatur des Dämpferöls wird hierbei indirekt gemessen, indem eine temperaturabhängige Größe einer elektrischen Komponente der Dämpferanlage zur Ermittlung der Temperatur verwendet wird. Insbesondere wird hierzu der ohmsche Widerstand einer Magnetspule einer einstellbaren Drossel des Dämpfers verwendet. Neben einer unmittelbaren Widerstandsmessung kann auch die Messung einer Phasenlage zwischen einem Stromverlauf und einem Spannungsverlauf über die Magnetspule Rückschlüsse auf die Temperatur des Dämpferöls erlauben.

Ein Problem bei derartigen bekannten Verfahren zur Bestimmung der Temperatur des Dämpferöls liegt in der Tatsache begründet, dass nicht nur die Magnetspule, sondern auch Bestandteile einer die Magnetspule ansteuernden Schaltung thermischen Einflüssen unterliegen. Temperaturabhängige Veränderungen von elektrischen Eigenschaften der Magnetspule werden daher bei der indirekten Messung der Temperatur von thermischen Effekten auf weitere Schaltungskomponenten, wie beispielsweise Halbleiter, überlagert. Aufgrund der Mehrzahl von Einflüssen auf das elektrische Signal besteht also kein direkter Zusammenhang mehr zwischen der Dämpferöltemperatur und dem beobachteten Signal. Bekannte Verfahren können daher unter bestimmten Betriebsbedingungen zu Ungenauigkeiten in der Bestimmung der Dämpferöltemperatur führen, wodurch sich die tatsächliche Dämpferhärte unter diesen Bedingungen von der gewünschten Dämpferhärte unterscheiden kann.

Der vorliegenden Erfindung liegt somit die Aufgabe zugrunde, ein verbessertes Verfahren zum Steuern eines Dämpfers für einen Kraftwagen bereitzustellen.

Diese Aufgabe wird durch ein Verfahren mit den Merkmalen des Patentanspruchs 1 gelöst.

Ein solches Verfahren zeichnet sich erfindungsgemäß dadurch aus, dass aus einem gemessenen Stromfluss und Spannungsabfall über einen Aktuator eines Dämpfers mittels einer Mustererkennung die Temperatur des Dämpferöls ermittelt wird. Durch die Verwendung von Mustererkennungssystemen ist es möglich, auch aus stark verrauschten, nichtlinear von vielen Einflussgrößen abhängigen Messwerten die Werte für die interessierenden Einflussgrößen - hier für die Temperatur - zu extrahieren. Hierdurch wird eine besonders genaue Bestimmung der Temperatur des Dämpferöls ermöglicht, wodurch sichergestellt werden kann, dass die tatsächliche Dämpferhärte immer der gewünschten Sollvorgabe entspricht.

Vorzugsweise wird zur Mustererkennung ein neuronales Netz verwendet. Künstliche neuronale Netze imitieren die Struktur biologischer Nervensysteme und bestehen aus einer Vielzahl einzelner Neuronen, die über gewichtete Verbindungen miteinander verknüpft sind. Die Gewichtung der Verknüpfungen kann während des so genannten Trainings des neuronalen Netzes angepasst werden. Während eines solchen Trainings werden dem neuronalen Netz Eingangsparameter und die zugeordneten gewünschten Ausgangswerte des Netzes vorgegeben und die jeweiligen Gewichtungen durch einen Lernalgorithmus angepasst.

Als Eingangswerte dienen im genannten Beispiel der zeitabhängige Verlauf des Stromflusses durch einen Aktuator eines Dämpfers sowie der zeitabhängige Verlauf eines Spannungsabfalls über diesen Aktuator, und als gewünschte Ausgangswerte werden jeweils zugeordnete, durch direkte Messung bestimmte Temperaturen vorgegeben. Bei entsprechendem Training sind künstliche neuronale Netze in der Lage, komplizierte nichtlineare Funktionen abzubilden. Hierdurch ist es ohne aufwändige mathematischanalytische Behandlung möglich, den Temperatureinfluss auf das elektrische Verhalten des Aktuators des Dämpfers von anderen Einflussgrößen zu separieren und somit die Temperatur des Dämpferöls besonders zuverlässig auf indirekte Weise zu ermitteln.

Bei einer weiteren bevorzugten Ausführungsform der Erfindung wird der zeitabhängige Stromfluss und/oder der zeitabhängige Spannungsabfall über den Aktuator und/oder die ermittelte Temperatur mittels eines Filteralgorithmus gefiltert. Hierdurch kann eine besonders hohe Qualität der Temperaturbestimmung sichergestellt werden, da mittels eines derartigen Filters statistische Ausreißer in der Messung identifiziert und eliminiert werden können. Derartige Ausreißer, wie sie beispielsweise durch elektrische Effekte im Bordnetz (Spannungsschwankungen und dergleichen) entstehen können, würden ansonsten die Messung verfälschen und könnten zu sprunghaften Änderungen der Dämpfereinstellung führen.

Vorzugsweise basiert der Filteralgorithmus auf dem Prinzip des Kalman-Filters. Das Kalman-Filter beinhaltet ein Schätzverfahren, welches ermöglicht, messtechnisch verursachte Störungen von einer eigentlichen Messgröße zu separieren. Die Messgröße muss hierzu als zeitabhängige Messreihe vorliegen. Das Kalman-Filter beruht auf einem Modell des gemessenen Systems und ist in der Lage Vorhersagen über die zu erwartende zeitliche Entwicklung des gemessenen Systems zu treffen. Bei einem Abweichen der tatsächlichen Messung von der Vorhersage können bei Überschreitung eines vorgegebenen Schwellenwertes die abweichenden Messpunkte verworfen werden, um so die Messung zu glätten und Störeffekte zu eliminieren. Aufgrund der besonders guten rechnerischen Handhabbarkeit des Kalman-Filters kann dieses Verfahren auch in echtzeitfähigen Systemen Anwendung finden. Hierdurch ist das Kalman-Filter besonders gut zur Anwendung in der Steuerung von Dämpfern für Kraftfahrzeuge geeignet.

Vorzugsweise wird zum Ermitteln der Temperatur zunächst eine Ausgangstemperatur bei Inbetriebnahme des Kraftwagens sowie eine Differenz zwischen einer gegenwärtigen Temperatur des Dämpferöls und der Ausgangstemperatur ermittelt. Als Ausgangstemperatur kann dabei besonders einfach eine direkt gemessene Umgebungstemperatur Anwendung finden. Da durch das geschilderte Verfahren zunächst zeitabhängige Änderungen des Strom-Spannungsverlaufes durch den Aktuator des Dämpfers beobachtet werden, ist das Verfahren besser geeignet, derartige zeitliche Änderungen der Temperatur aufzunehmen als unmittelbare absolute Temperaturmessungen durchzuführen. Durch die Ermittlung der Differenz zwischen der gegenwärtigen Temperatur und der Ausgangstemperatur werden daher besonders gute Messungen erhalten.

Vorzugsweise wird die ermittelte Temperatur des Dämpferöls in eine von wenigstens zwei Temperaturklassen eingeordnet. Um eine hinreichend komfortable und präzise Dämpfersteuerung zu erreichen, ist es nicht notwendig, zu jedem Zeitpunkt die exakte Temperatur des Dämpferöls zu kennen. Dies würde ein ständiges Nachregeln des Dämpfers erfordern, was wiederum zu Komfort- oder Sicherheitseinbußen im Fahrbetrieb des Kraftwagens führen könnte. Durch die Einteilung der gemessenen Temperatur in Temperaturklassen wird ein solches ständiges Nachregeln vermieden und die temperaturbedingten Änderungen der Dämpfereinstellung auf ein Minimum reduziert.

Das Verfahren ist weiterhin geeignet, den Dämpfer vor Überhitzung zu schützen. In einer bevorzugten Ausführungsform des Verfahrens wird hierzu bei Überschreiten eines Schwellwertes für die Temperatur des Dämpferöls ein Warnsignal erzeugt. Ein Fahrer des Kraftwagens kann dann auf die Situation reagieren. Alternativ und/oder zusätzlich hierzu sind auch aktive Eingriffe in das Dämpfersystem zum Schutz vor Überhitzung möglich. Beispielsweise kann hierzu bei Überschreiten eines Schwellwerts für die Temperatur die Dämpferhärte des Dämpfers so modifiziert werden, dass weniger Energie in das Dämpferöl eingetragen wird.

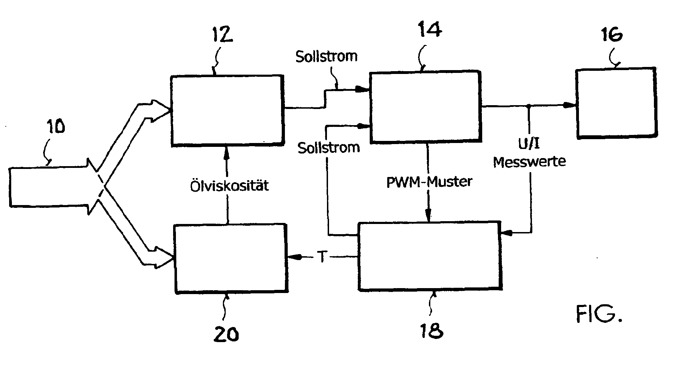

Im Folgenden werden die Erfindung und ihre Ausführungsformen anhand der Zeichnung näher erläutert. Die einzige Figur zeigt eine schematische Blockdarstellung des Signalflusses bei einer Ausführungsform des erfindungsgemäßen Verfahrens.

Zur Steuerung eines Stoßdämpfers eines Kraftwagens werden Umgebungsdaten 10 an einen Dämpferregler 12 übermittelt. Die Umgebungsdaten 10 können Informationen über eine Beschaffenheit einer momentan befahrenen Fährbahn, über eine momentane Fahrzeuggeschwindigkeit, eine Kurvenlage und dergleichen umfassen. Von den Umgebungsdaten 10 sind weiterhin Benutzervorgaben umfasst. So kann bei steuerbaren Dämpfersystemen beispielsweise der Benutzer vorgeben, ob er ein komfortables oder sportliches Fahrverhalten wünscht.

Durch den Dämpferregler 12 wird aufgrund dieser Umgebungsdaten 10 eine Solleinstellung für einen Stoßdämpfer 16 festgelegt. Bei dem Stoßdämpfer 16 handelt es sich um einen hydraulischen Schwingungsdämpfer, bei welchem sich ein Kolben in einem Zylinder bewegt und dabei Öl durch Drosselstellen verdrängt. Die Härte des Dämpfers kann dabei durch den Strömungsquerschnitt der Drosselstellen festgelegt werden. Hierzu sind die Drosselstellen durch aktiv einstellbare Ventile gebildet, deren Strömungsquerschnitt durch Strombeaufschlagung einer Magnetspule verändert werden kann.

Zu Ansteuerung dieser Magnetspule dient ein Stromregler 14. Der Stromregler 14 empfängt vom Dämpferregler 12 eine Sollvorgabe (Sollstrom) und erzeugt aus dieser Vorgabe ein pulsweitenmoduliertes Signal, mit welchem die Magnetspule des Dämpfers 16 beaufschlagt wird. Je nach Puls-Pausen-Verhältnis diesen pulsweitenmodulierten Signals stellt die Magnetspule dabei einen anderen Strömungsquerschnitt der Drosselstelle ein und verändert damit die Härte des Dämpfers 16. Durch den Stromregler 14 wird der Strom der Pulse des pulsweitenmodulierten Signals fest vorgegeben, die Spannung stellt sich gemäß der elektrischen Gesetzmäßigkeiten ein.

Durch die Bewegung des Kolbens des Dämpfers 16 sowie durch die Strömungsbewegung des Dämpferöls durch die Drosselstellen wird die in den Dämpfer 16 eingebrachte mechanische Energie in Wärme umgesetzt. Hierdurch erhitzt sich das Dämpferöl des Dämpfers 16 und verändert dabei seine Viskosität. Insbesondere wird bei Erwärmung das Dämpfer leichtflüssiger. Daher sinkt bei Erwärmung die Dämpferhärte des Dämpfers 16.

Um diesen Temperatureinfluss auf die Dämpferhärte des Dämpfers 16 zu kompensieren wird über eine Temperaturschätzeinheit 18 indirekt die Temperatur des Dämpferöls bestimmt. Die indirekte Bestimmung der Temperatur erfolgt dabei durch Messung der elektrischen Eigenschaften der Magnetspule des Dämpfers 16. Diese wird nämlich vom Dämpferöl durchströmt und steht daher in direktem thermischen Kontakt mit diesem. In Abhängigkeit von der Temperatur des Dämpferöls ändert sich somit beispielsweise der Widerstand der Magnetspule 16. Da auch andere Komponenten, insbesondere Halbleiter, der Dämpfersteuerung in thermischen Kontakt mit dem Dämpferöl stehen und somit den Stromfluss durch und den Spannungsabfall über die Magnetspule in Abhängigkeit von der Temperatur beeinflussen, kann das temperaturabhängige elektrische Verhalten der Magnetspule nicht unmittelbar gemessen werden.

Der Temperaturschätzvorrichtung 18 wird zur indirekten Bestimmung der Temperatur zunächst ein Zeitverlauf des Stromflusses durch die Magnetspule und ein Zeitverlauf des Spannungsabfalls über die Magnetspule des Dämpfers 16 übermittelt (U/I-Messwerte). Der Stromregler 14 übermittelt weiterhin das Muster der Pulsvariantenmodulation (PWM-Muster) des an die Magnetspule 16 übermittelten Signals an die Temperaturschätzeinrichtung. Weiterhin werden Daten über die Sollstromvorgabe an den Stromregler an die Temperaturschätzeinrichtung übermittelt (Sollstrom). Alle diese Daten werden zeitaufgelöst registriert. Um das gewünschte Signal, nämlich die temperaturabhängige Veränderung der elektrischen Eigenschaften der Magnetspule des Dämpfers 16 von den Signalen, die durch die temperaturabhängige Änderung der Eigenschaften weiterer Komponenten erzeugt werden, zu separieren und das Rauschen der Messanordnung zu unterdrücken, verwendet die Temperaturschätzeinrichtung einen Mustererkennungsalgorithmus. Hierzu kann insbesondere ein neuronales Netz verwendet werden. Auch andere Mustererkennungsverfahren können Anwendung finden.

Ein solches neuronales Netz muss zunächst trainiert werden. Hierzu werden dem neuronalen Netz zunächst gemessene Strom-Spannungs-Kurven, Pulsweitenmodulationsmuster sowie Sollstromvorgaben mit jeweils zugeordneten, direkt gemessenen Öltemperaturwerten präsentiert. Die Gewichtung der Verknüpfungen einzelner Neuronen des neuronalen Netzes wird dabei durch einen Trainingsalgorithmus so lange angepasst, bis das neuronale Netz aufgrund der Eingangsdaten eine Abschätzung der gewünschten Temperatur liefern kann. Es ist dabei nicht nötig, exakte Temperaturen vorherzusagen. Vielmehr genügt die Klassifizierung der Eingangsdaten - also der Strom-Spannungskurven und Pulsweitenmodulationsmuster - in wenige zugeordnete Temperaturklassen.

Die so bestimmten Temperaturen bzw. Temperaturklassen (T) werden an ein Temperaturmodell 20 weitergeleitet. Dieses Temperaturmodell bildet den Zusammenhang zwischen Temperatur und Viskosität des Dämpferöls ab. In das Temperaturmodell gehen zudem noch Umgebungsinformationen, wie beispielsweise die Umgebungstemperatur oder momentane Fahrzustände des Kraftwagens ein. Um statistische Ausreißer zu eliminieren und exakte Vorhersagen über die Viskosität des Dämpferöls treffen zu können, kann hierbei noch eine Datenglättung über ein Kalman-Filter oder dergleichen erfolgen. Schätzwerte für die Ölviskosität werden schließlich zurück an den Dämpferregler übermittelt, so dass die Sollvorgaben, die der Dämpferregler an den Stromregler weiterleitet, an die momentane Viskosität des Dämpferöls angepasst werden können.

Insgesamt kann erzielt werden, dass die Dämpferhärte des Dämpfers 16 unabhängig von einer momentanen Öltemperatur des Dämpferöls immer auf den gewünschten Wert eingestellt werden kann. Auch bei starken Temperaturunterschieden, wie sie sich beispielsweise nach dem Start eines Fahrzeugs bei sehr kalten Umgebungstemperaturen in Folge der nachfolgenden Erwärmung des Dämpferöls ergeben können, werden so ausgeglichen, so dass jederzeit der gewünschte Fahrkomfort sowie die gewünschte Fahrsicherheit aufrecht erhalten werden können.

## Patentansprüche

1. Verfahren zum Steuern eines Dämpfers für einen Kraftwagen, bei welchem ein elektrischer Aktuator zum Einstellen eines Strömungsquerschnitts eines steuerbares Drosselelement des Dämpfers in Abhängigkeit von einer vorgegebenen Dämpferhärteeinstellung und einer Temperatur eines Dämpferöls mit einem elektrischen Signal beaufschlagt wird, wobei zur Bestimmung der Temperatur des Dämpferöls ein Stromfluss durch den Aktuator sowie ein Spannungsabfall über den Aktuator jeweils zeitabhängig gemessen wird,
**dadurch gekennzeichnet, dass**
aus dem Stromfluss und Spannungsabfall mittels einer Mustererkennung die Temperatur des Dämpferöls ermittelt wird.

2. Verfahren nach Anspruch 1,
**dadurch gekennzeichnet, dass**
zur Mustererkennung ein neuronales Netz verwendet wird.

3. Verfahren nach Anspruch 1 oder 2,
**dadurch gekennzeichnet, dass**
der zeitabhängige Stromfluss und/oder der zeitabhängige Spannungsabfall und/oder die ermittelte Temperatur mittels eines Filteralgorithmus gefiltert wird.

4. Verfahren nach Anspruch 3,
**dadurch gekennzeichnet, dass**
im Rahmen der Durchführung des Filteralgorithmus ein Kalman-Filter verwendet wird.

5. Verfahren nach einem der Ansprüche 1 bis 4,
**dadurch gekennzeichnet, dass**
zum Ermitteln der Temperatur eine Ausgangstemperatur bei Inbetriebnahme des Kraftwagens sowie eine Differenz zwischen einer gegenwärtigen Temperatur und der Ausgangstemperatur ermittelt wird.

6. Verfahren nach einem der Ansprüche 1 bis 5,
**dadurch gekennzeichnet, dass**
die ermittelte Temperatur des Dämpferöls in eine von wenigstens zwei Temperaturklassen eingeordnet wird.

7. Verfahren nach einem der Ansprüche 1 bis 6,
**dadurch gekennzeichnet, dass**
bei Überschreiten eines Schwellwertes für die Temperatur des Dämpferöls ein Warnsignal erzeugt wird.

8. Verfahren nach einem der Ansprüche 1 bis 7,
**dadurch gekennzeichnet, dass**
bei Überschreiten eines Schwellwertes für die Temperatur die Dämpferhärte des Dämpfers reduziert wird.

## Claims

1. Method for controlling a shock absorber for a motor vehicle, in which an electric actuator for adjusting a cross section of flow of a controllable throttle element of the shock absorber is charged with an electrical signal depending on a predetermined shock-absorption hardness adjustment and a temperature of a shock-absorption oil, a current flow and a voltage drop each being measured in a time-dependent manner by the actuator to determine the temperature of the shock-absorption oil, **characterised in that** the temperature of the shock-absorption oil is established from the current flow and voltage drop by means of pattern recognition.

2. Method according to claim 1, **characterised in that** a neural network is used for pattern recognition.

3. Method according to either claim 1 or claim 2, **characterised in that** the time-dependent current flow and/or the time-dependent voltage drop and/or the established temperature is/are filtered by means of a filter algorithm.

4. Method according to claim 3, **characterised in that** a Kalman filter is used when carrying out the filter algorithm.

5. Method according to any of claims 1 to 4, **characterised in that** both a starting temperature upon start-up of the motor vehicle and a difference between a current temperature and the starting temperature are established in order to establish the temperature.

6. Method according to any of claims 1 to 5, **characterised in that** the established temperature of the shock-absorption oil is classified as belonging to one of at least two temperature classes.

7. Method according to any of claims 1 to 6, **characterised in that** a warning signal is produced when a temperature threshold for the shock-absorption oil is exceeded.

8. Method according to any of claims 1 to 7, **characterised in that** the shock-absorption hardness of the shock absorber is reduced when a temperature threshold is exceeded.

## Revendications

1. Procédé de commande d'un amortisseur pour un véhicule automobile, dans lequel un actionneur électrique pour régler une section transversale d'écoulement d'un élément d'étranglement réglable de l'amortisseur en fonction d'un réglage prédéterminé de la dureté de l'amortisseur et d'une température d'une huile d'amortisseur est alimenté par un signal électrique, dans lequel, pour déterminer la température de l'huile de l'amortisseur, on mesure en fonction du temps un flux de courant passant à travers l'actionneur ainsi qu'une chute de tension aux bornes de l'actionneur respectivement,
**caractérisé en ce que**
l'on détermine à partir du flux de courant et de la chute de tension la température de l'huile de l'amortisseur au moyen d'une reconnaissance de modèle.

2. Procédé selon la revendication 1,
**caractérisé en ce que**
l'on utilise un réseau de neurones pour la reconnaissance de modèle.

3. Procédé selon la revendication 1 ou la revendication 2,
**caractérisé en ce que**
le flux de courant en fonction du temps et/ou la chute de tension en fonction du temps et/ou la température déterminée est ou sont filtrés au moyen d'un algorithme de filtrage.

4. Procédé selon la revendication 3,
**caractérisé en ce que**
l'on utilise un filtre de Kalman dans le cadre de la réalisation de l'algorithme de filtrage.

5. Procédé selon l'une quelconque des revendications 1 à 4,
**caractérisé en ce que**,
pour obtenir la température, on détermine une température de sortie à la mise en marche du véhicule automobile ainsi qu'une différence entre une température présente et la température de sortie.

6. Procédé selon l'une quelconque des revendications 1 à 5,
**caractérisé en ce que**
la température déterminée de l'huile de l'amortisseur est classée en une d'au moins deux classes de température.

7. Procédé selon l'une quelconque des revendications 1 à 6,
**caractérisé en ce que**,
lors du dépassement d'une valeur de seuil pour la température de l'huile de l'amortisseur, un signal d'avertissement est produit.

8. Procédé selon l'une quelconque des revendications 1 à 7,
**caractérisé en ce que**,
lors du dépassement d'une valeur de seuil pour la température, on réduit la dureté de l'amortisseur.
